# EUROPEAN PATENT APPLICATION

(11) **EP 3 200 430 A1**
(43) Date of publication of application: **02.08.2017**
(21) Application number: 16794198.8
(22) Date of filing: 11.07.2016
(51) Int. Cl.: H04L 29/08, G06F 17/30, H04L 29/06, H04N 21/234, H04N 21/433

(54) **ADVERTISEMENT DATA PROCESSING METHOD AND ROUTER**

(30) Priority: 01.12.2015 CN 201510869052
(71) Applicant: Le Holdings (Beijing) Co., Ltd., Beijing 100025 (CN); Le Shi Internet Information & Technology Corp., Beijing, Beijing 100025 (CN)
(72) Inventor: AO, Weibo, Beijing 100025 (CN)
(74) Representative: Würmser, Julian
(86) International application number: PCT/CN2016/089704
(87) International publication number: WO 2017/092364

(57) **Abstract**

Embodiments of the present disclosure provide a method for processing advertisement data and a router. The method for processing advertisement data includes: receiving a data download request that is sent by a terminal device and that carries advertisement location data; retrieving whether advertisement content data that is associated with the advertisement location data is stored locally; forwarding the data download request to a content delivery network CDN server, when no the advertisement content data is stored locally; and receiving the advertisement content data that is sent by the CDN server according to the advertisement location data, and implementing associative storing of the advertisement location data and the advertisement content data. According to the method for processing advertisement data and the router in the embodiments of the present disclosure, advertisement location data and advertisement content data are stored correspondingly, so that the data is directly acquired when a terminal device requires for the data again, thereby improving a data transmission speed, and reducing load of the CDN server.

## Description

The present disclosure claims priority to Chinese Patent Application No. 201510869052.7, filed with the Chinese Patent Office on December 1, 2015 and entitled "METHOD FOR PROCESSING ADVERTISEMENT DATA AND ROUTER", which is incorporated herein by reference in its entirety.

### TECHNICAL FIELD

The present disclosure relates to Internet technologies, and in particular, to a method for processing advertisement data and a router.

### BACKGROUND

With popularity of Internet multimedia technologies, watching online video content has gradually become a very important part of people's work, study, entertainment, and life. Accordingly, playing an advertisement before or during a video has gradually become a common and important advertising manner.

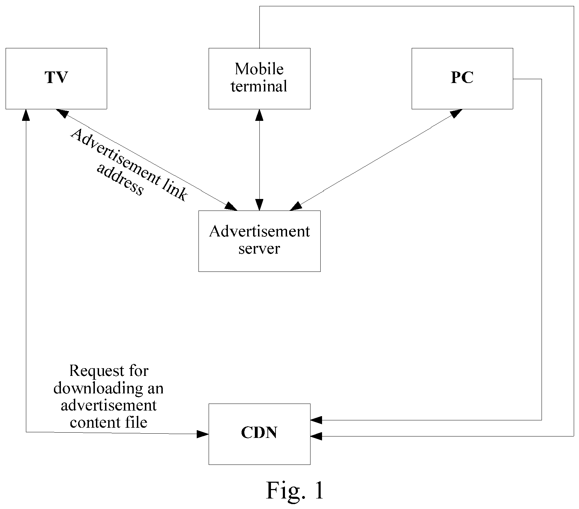

FIG. 1 is an exemplary schematic diagram of a process of processing advertisement data in the prior art, referring to FIG. 1. The inventor finds during implementation of the present disclosure that a multimedia device such as a smart television or a mobile terminal usually needs to acquire an advertisement link address from an advertisement server, and send a request to a content delivery network (Content Delivery Network, CDN) for downloading a content file (for example, a picture or a video) corresponding to the advertisement link address. It can be seen that the CDN server needs to be accessed each time when the advertisement content file is downloaded, which imposes heavy load on the CDN server and occupies a large amount of bandwidth, leading to a slow transmission speed and poor transmission stability.

### SUMMARY

An objective of the present disclosure is to provide a method for processing advertisement data and a router, so as to implement associative storing of advertisement location data and advertisement content data , and the data can be directly acquired when a terminal device requires for the data again, thereby improving a data transmission speed and stability.

According to an aspect of the present disclosure, a method for processing advertisement data is provided. The method includes: receiving a data download request that is sent by a terminal device and that carries advertisement location data; retrieving whether advertisement content data that is associated with the advertisement location data is stored locally; forwarding the data download request to a content delivery network CDN server, when no the advertisement content data is stored locally; and receiving the advertisement content data that is sent by the CDN server according to the advertisement location data, and storing the advertisement location data and the advertisement content data in an associated manner.

In an embodiment, the method further includes: sending, the advertisement content data which is retrieved, to the terminal device, when the advertisement content data is stored locally.

In an embodiment, the method further includes: sending the advertisement content data that is acquired from the CDN server to the terminal device.

In an embodiment, the advertisement location data is a uniform resource locator URL indicating a download link address of the advertisement content data.

In an embodiment, the advertisement content data includes at least one of the following media content: a text, a picture, or a video.

According to another aspect of the present disclosure, a router is further provided. The router includes: a request receiving module, configured to receive a data download request that is sent by a terminal device and that carries advertisement location data; a data retrieving module, configured to retrieve whether advertisement content data that is associated with the advertisement location data is stored locally; a request forwarding module, configured to forward the data download request to a content delivery network CDN server when no advertisement content data is stored locally; and a data receiving and storage module, configured to: receive the advertisement content data that is sent by the CDN server according to the advertisement location data, and store the advertisement location data and the advertisement content data in an associated manner.

In an embodiment, the router further includes: a data sending module, configured to send, the advertisement content data which is retrieved, to the terminal device, when the advertisement content data is stored locally.

In an embodiment, the data sending module is further configured to send the advertisement content data that is acquired from the CDN server to the terminal device.

In an embodiment, the advertisement location data is a uniform resource locator URL indicating a download link address of the advertisement content data.

In an embodiment, the advertisement content data includes at least one of the following media content: a text, a picture, or a video.

An embodiment of the present disclosure provides a computer readable storage medium, including a computer executable instruction, where the computer executable instruction enables, when at least one processor executes, the processor to execute the foregoing method.

An embodiment of the present disclosure provides an electronic device, including: a memory configured to store an instruction, a processor, and a bus system, where the processor is connected to the memory through the bus system, and the processor is configured to: execute the instruction stored by the memory, and execute the foregoing method.

According to the method for processing advertisement data and the router provided in the embodiments of the present disclosure, a data download request sent by a terminal device is received, further retrieve whether advertisement content data corresponding to advertisement location data in the data download request is stored locally, and when no advertisement content data is stored, the data download request is forwarded to a CDN server to acquire the advertisement content data, so as to implement associative storing of the advertisement location data and the advertisement content data , and the data can be directly acquired when a terminal device requires for the data again, thereby improving a data transmission speed and stability, and reducing load of the CDN server.

### BRIEF DESCRIPTION OF THE DRAWINGS

FIG. 1 is an exemplary schematic diagram of a process of processing advertisement data in the prior art;
FIG. 2 is a flowchart of a method for processing advertisement data according to Embodiment 1 of the present disclosure; and
FIG. 3 is a logical block diagram of a router according to Embodiment 2 of the present disclosure.

### DETAILED DESCRIPTION

A basic concept of embodiments of the present disclosure is to provide a technical solution to process advertisement data. A router receives a data download request sent by a terminal device, where the data download request carries advertisement location data, retrieving whether advertisement content data corresponding to the advertisement location data is stored locally, and if no advertisement content data is stored locally, the data download request is forwarded to a CDN server to acquire the advertisement content data, so as to store the advertisement location data and the advertisement content data in an associated manner. The data can be directly acquired from the router when a terminal device requires for the data again, and there is no need to access the CDN server, thereby improving a data transmission speed and stability, reducing load of the CDN server, and saving bandwidth resources.

The following describes a method for processing advertisement data and a router in exemplary embodiments of the present disclosure in detail with reference to the accompanying drawings.

### Embodiment 1

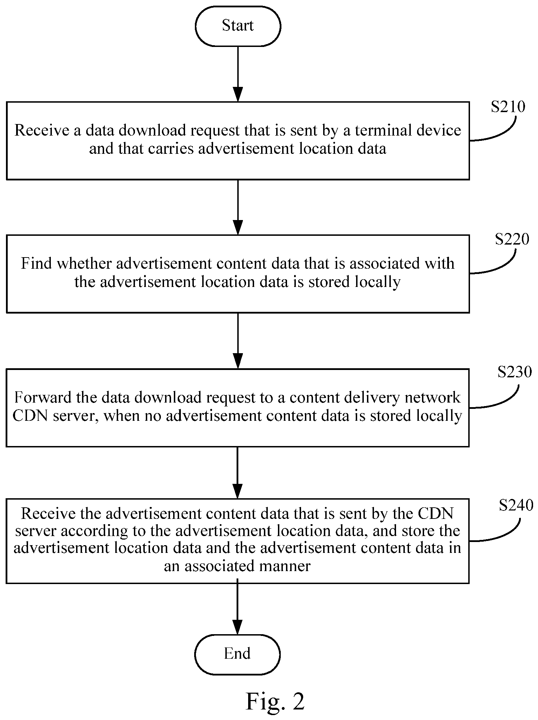

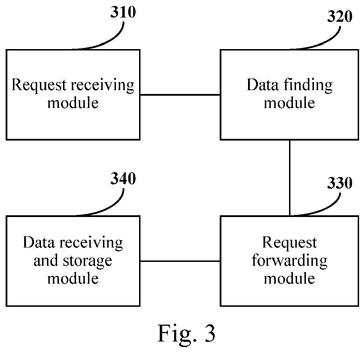

FIG. 2 is a flowchart of a method for processing advertisement data according to Embodiment 1 of the present disclosure. Steps of the method for processing advertisement data are executed by a router shown in FIG. 3.

Referring to FIG. 2, in step S210, the apparatus receives a data download request that is sent by a terminal device and that carries advertisement location data.

The terminal device may be a cell phone, a tablet computer, a smart television, or the like. It should be noted that the advertisement location data may be a uniform resource locator URL indicating a download link address of advertisement content data.

In Step S220,the apparatus retrieves whether advertisement content data that is associated with the advertisement location data is stored locally.

That is, after the advertisement location data is acquired, local storage is retrieved according to the advertisement location data to determine whether advertisement content data corresponding to the advertisement location data is stored. The advertisement content data herein may include but is not limited to at least one of the following media contents: a text, a picture, or a video.

In Step S230,the apparatus forwards the data download request to a content delivery network CDN server, when no the advertisement content data is stored locally.

Specifically, if advertisement content data corresponding to the advertisement location data is not retrieved by locally retrieving, the router forwards the data download request to the CDN server, so as to acquire the advertisement content data by accessing the CDN server.

In Step S240,the apparatus receives the advertisement content data that is sent by the CDN server according to the advertisement location data, and store the advertisement location data and the advertisement content data in an associated manner.

After the processing of steps S210 to S230, the advertisement content data that is acquired, according to the advertisement location data, and sent by the CDN server is received, further, a correspondence between the advertisement location data and the advertisement content data is established so as to store in an associated manner.

When the advertisement location data and the advertisement content data are stored in an associated manner, the acquired advertisement content data also needs to be fed back to the terminal device sending the request. Therefore, the method may further include: sending the advertisement content data that is acquired from the CDN server to the terminal device.

To reduce load of the CDN server, on the premise that the advertisement content data corresponding to the advertisement location data is stored in a router, according to a preferred embodiment of the present disclosure, the method further includes: sending, the advertisement content data which is retrieved, to the terminal device, when the advertisement content data is stored locally.

According to the method for processing advertisement data provided in this embodiment, a data download request sent by a terminal device is received, where the data download request carries advertisement location data, it is retrieved whether advertisement content data corresponding to the advertisement location data is stored locally, and if no advertisement content data is stored, the data download request is forwarded to a CDN server to acquire the advertisement content data, so as to implement associative storing of the advertisement location data and the advertisement content data. When a new terminal device requires for the data, the advertisement content data corresponding to the advertisement location data that is carried in the request can be directly obtained, and there is no need to access the CDN server, thereby improving a data transmission speed and stability, reducing load of the CDN server, and saving bandwidth resources.

### Embodiment 2

Based on the same technical concept, FIG. 3 is a logical block diagram of a router according to Embodiment 2 of the present disclosure. Referring to FIG. 3, the router includes a request receiving module 310, a data retrieving module 320, a request forwarding module 330, and a data receiving and storage module 340, where the request receiving module 310, the data search module 320, the request forwarding module 330, and the data receiving and storage module 340 are connected in order.

The request receiving module 310 is configured to receive a data download request that is sent by a terminal device and that carries advertisement location data.

The data retrieving module 320 is configured to retrieve whether advertisement content data that is associated with the advertisement location data is stored locally.

The request forwarding module 330 is configured to forwardthe data download request to a content delivery network CDN server, when no advertisement content data is stored locally.

The data receiving and storage module 340 is configured to: receive the advertisement content data that is sent by the CDN server according to the advertisement location data, and implement associative storing of the advertisement location data and the advertisement content data.

According to the router provided in this embodiment, a data download request sent by a terminal device is received, it is further retrieve whether advertisement content data corresponding to advertisement location data in the data download request is stored locally, and when no advertisement content data is stored, the data download request is forwarded to a CDN server to acquire the advertisement content data, so as to implement associative storing of the advertisement location data and the advertisement content data , and the data can be directly acquired when a terminal device requires for the data again, thereby improving a data transmission speed and stability.

To reduce load of the CDN server and save bandwidth resources, on the premise that the advertisement content data corresponding to the advertisement location data is stored in the router, the data can be directly acquired from the router. Accordingly, the router may further include: a data sending module (not shown in a figure), configured to send, the advertisement content data which is retrieved, to the terminal device, when the advertisement content data is stored locally.

Further, the data sending module is further configured to send the advertisement content data that is acquired from the CDN server to the terminal device.

In an embodiment, the advertisement location data is a uniform resource locator URL indicating a download link address of the advertisement content data.

In an embodiment, the advertisement content data includes at least one of the following media content: a text, a picture, or a video.

It should be noted that according to the needs of implementations, each part/step described in the present disclosure may be divided into more parts/steps, or two or more parts/steps or some operations of parts/steps may be combined into a new part/step, so as to achieve the objective of the embodiments of the present disclosure.

An embodiment of the present disclosure further provides a device. The device includes: a memory, a processor, and a bus system. The processor is connected to the memory by using the bus system, the memory is configured to store an instruction, and the processor is configured to: execute the instruction stored in the memory, and execute the method in the foregoing embodiment. For example, in an embodiment, the processor is configured to execute a method for processing advertisement data, including: receiving a data download request that is sent by a terminal device and that carries advertisement location data; retrieving whether advertisement content data that is associated with the advertisement location data is stored locally; forwarding the data download request to a content delivery network CDN server, when no advertisement content data is stored locally; and receiving the advertisement content data that is sent by the CDN server according to the advertisement location data, and implementing associative storing of the advertisement location data and the advertisement content data.

The memory may be a non-volatile computer readable storage medium, configured to store a computer executable instruction. When the instruction is executed by one or more processors, the instruction enables the processor to execute the steps of the method in the foregoing embodiment, for example, as steps S210 to S240 described in FIG. 2, or to execute functions of the apparatus modules in the foregoing apparatus embodiment, for example, functions of the module 310 to the module 314 described in FIG. 3. The computer executable instruction may be stored and/or transmitted in any non-volatile computer readable storage mediums, so as to be used by an instruction execution system, an apparatus, or a device, or be used by a combination of the instruction execution system, the apparatus, and the device. The instruction execution system, the apparatus, or the device may be, for example, a system based on a computer, a system including a processor, or other systems that can acquire the instruction from the instruction execution system, the apparatus, or the device and execute the instruction. For an objective of the text, the "non-volatile computer readable storage medium" may be any mediums tangibly including or storing a computer executable instruction. The computer executable instruction may be used by an instruction execution system, a device, or a system or may be used by a combination of the instruction execution system, an apparatus, and the device. The non-volatile computer readable storage medium may include but is not limited to a magnetic, an optical, and/or a semiconductor storage apparatus. Examples of these storage apparatuses include a magnetic disk, a compact disc based on a CD, DVD, or Blu-ray technology, and a persistent solid-state memory (for example, a flash memory or a solid-state driver).

It should be understood that in this embodiment of the present disclosure, the processor may be a central processing unit (Central Processing Unit, "CPU" for short). Alternatively, the processor may be a general purpose processor, a digital signal processor (DSP), an application-specific integrated circuit (ASIC), a field programmable gate array (FPGA), or a programmable logic device, a discrete gate, or a transistor logic device, a discrete hardware component, or the like. The general purpose processor may be a microprocessor or any regular processors.

The foregoing method according to the embodiments of the present disclosure may be implemented in hardware or firmware, or may be implemented as software or computer code that can be stored in a recording medium (for example, a CD ROM, a RAM, a floppy disk, a hard disk or a magneto-optical disc), or may be implemented as computer code that is downloaded from a network, is originally stored in a remote recording medium or a non-transitory machine readable medium, and will be stored in a local recording medium; therefore, the method described herein can be processed by using software that is stored in a recording medium that uses a general-purpose computer, a special-purpose processor or programmable or special-purpose hardware (for example, an ASIC or an FPGA). It may be understood that a computer, a processor, a microprocessor controller or programmable hardware includes a storage component (for example, a RAM, a ROM, and a flash memory) that can store or receive software or computer code. When the software or computer code is accessed and executed by the computer, the processor or the hardware, the processing method described herein is implemented. In addition, when the general-purpose computer accesses code that is used for implementing processing shown herein, the general-purpose computer that executes the code is changed to a special-purpose computer configured to execute the processing shown herein.

The foregoing descriptions are merely specific implementation manners of the present disclosure, but are not intended to limit the protection scope of the present disclosure. Any variation or replacement readily figured out by a person skilled in the art within the technical scope disclosed in the present disclosure shall fall within the protection scope of the present disclosure. Therefore, the protection scope of the present disclosure shall be subject to the protection scope of the claims.

## Claims

1. A method for processing advertisement data, comprising:
receiving a data download request that is sent by a terminal device and that carries advertisement location data;
retrieving whether advertisement content data that is associated with the advertisement location data is stored locally;
forwarding the data download request to a content delivery network CDN server, when no the advertisement content data is stored locally; and
receiving the advertisement content data that is sent by the CDN server according to the advertisement location data, and storing the advertisement location data and the advertisement content data in an associated manner.

2. The method according to claim 1, further comprising:
sending, the advertisement content data which is retrieved, to the terminal device, when the advertisement content data is stored locally.

3. The method according to claim 1 or 2, further comprising:
sending the advertisement content data that is acquired from the CDN server to the terminal device.

4. The method according to claim 1, 2, or 3, wherein the advertisement location data is a uniform resource locator URL indicating a download link address of the advertisement content data.

5. The method according to any one of claims 1 to 4, wherein the advertisement content data comprises at least one of the following media content: a text, a picture, or a video.

6. A router, comprising:
a request receiving module, configured to receive a data download request that is sent by a terminal device and that carries advertisement location data;
a data retrieving module, configured to retrieve whether advertisement content data that is associated with the advertisement location data is stored locally;
a request forwarding module, configured to forward the data download request to a content delivery network CDN server, when no the advertisement content data is stored locally; and
a data receiving and storage module, configured to: receive the advertisement content data that is sent by the CDN server according to the advertisement location data, and store the advertisement location data and the advertisement content data in an associated manner.

7. The router according to claim 6, further comprising:
a data sending module, configured to send, the advertisement content data which is retrieved, to the terminal device, when the advertisement content data is stored locally.

8. The router according to claim 6 or 7, wherein the data sending module is further configured to send the advertisement content data that is acquired from the CDN server to the terminal device.

9. The router according to claim 6, 7, or 8, wherein the advertisement location data is a uniform resource locator URL indicating a download link address of the advertisement content data.

10. The router according to any one of claims 6 to 9, wherein the advertisement content data comprises at least one of the following media content: a text, a picture, or a video.
